# EUROPEAN PATENT APPLICATION

(11) **EP 4 105 925 A1**
(43) Date of publication of application: **21.12.2022**
(21) Application number: 22174542.5
(22) Date of filing: 20.05.2022
(51) Int. Cl.: G10K 11/178

(54) **HEADSET WITH AUTOMATIC NOISE REDUCTION MODE SWITCHING**

(30) Priority: 17.06.2021 CN 202110670978
(71) Applicant: Plantronics, Inc., Santa Cruz, California 95060 (US)
(72) Inventor: NEVES, Matthew Nunes, Santa Cruz, 95060 (US); ZHOU, Xingyuan, Santa Cruz, 95060 (US); GRAHAM, John S, Santa Cruz, 95060 (US); XU, Xiaobing, Santa Cruz, 95060 (US)
(74) Representative: Optimus Patents Limited

(57) **Abstract**

A headset with automatic noise reduction mode switching is provided to enable better call experience when conducting a call. The headset comprises at least one or more earphones, one or more microphones, a processor, and an active noise cancellation circuit, connected at least with the processor. The processor is configured to determine whether a call is being conducted using the headset, and if a call is being conducted, to switch the active noise cancellation circuit from a first ANC mode to a second ANC mode.

## Description

### FIELD

The present disclosure relates generally to the headsets and headphones.

### BACKGROUND

This background section is provided for the purpose of generally describing the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Headphones and headsets are ubiquitous today, not only due to the increasing mobility of media consumption on mobile devices, but also due to an increase in video/audio conferencing and remote work. Some headphones and headsets comprise active noise cancellation (ANR) circuitry that reduces environmental noise to a user in noisy environments, such as on airplanes, in noisy public spaces, or in open space offices. While ANR technology thus increases the listening comfort to the user, the present inventors have determined that ANR systems may provide discomfort to the user when the user speaks. This is because the ANR system may also attenuate the user's own voice. Accordingly, an object exists to provide a headset with improved active noise cancellation.

### SUMMARY

In general and in one aspect, a headset with automatic noise reduction mode switching is provided, which headset comprises at least: one or more earphones, one or more microphones, a processor, and an active noise cancellation circuit, wherein the processor being configured to determine if a call being conducted using the headset; and wherein if a call is being conducted, the processor being configured to switch the active noise cancellation circuit from a first ANC mode to a second ANC mode.

The details of one or more embodiments are set forth in the accompanying drawings and the description below. Other features will be apparent from the description, drawings, and from the claims.

### DESCRIPTION OF DRAWINGS

FIG. 1 shows an embodiment of a headset in a schematic front view;
FIG. 2 shows a schematic block diagram of the headset according to the embodiment of FIG. 1;
FIG. 3 shows a block chart of an embodiment of the automatic mode switching operation of a processor of the headset according to the embodiment of FIG. 1; and
FIG. 4 shows a block chart of another embodiment of the automatic mode switching operation of a processor of the headset according to the embodiment of FIG. 1.

### DESCRIPTION

Specific example embodiments of the invention are here described in detail, below. In the following description of example embodiments of the invention, the specific details are described in order to provide a thorough understanding of the invention. However, it will be apparent to one of ordinary skill in the art that the invention may be practiced without these specific details. In other instances, well-known features have not been described in detail to avoid unnecessarily complicating the instant description.

In the following explanation of the present invention according to the example embodiments described, the terms "coupled (to/with)" and "connected (to/with)" are used to indicate a data and/or audio connection between at least two parts, components, or objects. Such a connection may be direct between the respective parts, components, or objects; or indirect, i.e., over intermediate parts, components, or objects. The connection may be a wired or wireless connection. It is noted that the above terms may also be used to indicate a physical or mechanical connection.

In the following description, ordinal numbers (e.g., first, second, third, etc.) may be used as an adjective for an element (*i.e*., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between like-named elements. For example, a first element is distinct from a second element, and the first element may encompass more than one element and succeed (or precede) the second element in an ordering of elements.

Considering today's increasing work flexibility including hot desking and remote work, office workers employ headsets with active noise cancellation (ANR) circuitry that reduces environmental noise to a user who is wearing the headset.

While ANR increases the listening comfort to the user, the present inventors have determined that ANR may provide discomfort to the user when the user speaks. This is because the ANR may also attenuate the user's own voice.

Accordingly, and in one exemplary aspect, a headset with automatic noise reduction switching is provided that comprises at least: one or more earphones, one or more microphones, a processor, and an active noise cancellation (ANR) circuit. According to the present aspect, the ANR circuit is connected with the processor. The processor is configured to at least determine whether a call being conducted using the headset, and if a call is being conducted, to switch the active noise cancellation circuit from a first ANC mode to a second ANC mode.

In the context of this application, the term "headset" refers to all types of headsets, headphones, and other head worn audio playback devices, such as for example circum-aural and supra-aural headphones, ear buds, in ear headphones, and other types of (wearable) earphones. The headset may be of mono, stereo, or multichannel setup.

The earphones of the present aspect may be of any suitable type to provide output audio to a user during use of the headset, i.e., when the user is wearing the headset on the user's head. The earphones in some example embodiments may be of circum-aural type. The earphones in some example embodiments may be of supra-aural type. Generally, and in some example embodiments, at least one of the earphones comprises one or more transducers, i.e., speaker drivers or (full band) speakers. In some example embodiments, at least one of the earphones furthermore comprises the processor, a wireless interface, an audio processor, and/or an audio amplifier. In some example embodiments, at least one of the earphones furthermore comprises a battery, a user interface, and/or the one or more microphones.

The one or more microphones may be of any suitable type to obtain an audio signal of the user's voice during use. In general, the microphones may be of the same or of different type of transducer to convert or "translate" the acoustic signals received into the corresponding electric signals. For example, at least one of the microphones may be of dynamic, condenser, electret, ribbon, carbon, piezoelectric, fiber optic, laser, or MEMS type.

The one or more microphones may for example be arranged integrated with one or more of the earphones. At least one of the microphones may for example be arranged on a microphone boom, connected with one of the earphones or another component of the headset.

The headset in some example embodiments may comprise an audio processor. The audio processor may be of any suitable type to provide output audio from an input audio signal. For example, the audio processor may be a digital sound processor (DSP). The audio processor may be integrated with the aforementioned processor or formed separately thereof. The headset may be wireless or wired, i.e., using a cable connection.

As discussed in the preceding, the headset of the present aspect comprises a processor and an active noise cancellation circuit. The processor may be of any suitable type to at least control the active noise cancellation circuit. In other words, the processor may be a controller or control circuit. For example, the processor may be a microcontroller, microprocessor, ASIC, or FPGA. The active noise cancellation circuit may be of any suitable type to actively reduce noise to the user when wearing, i.e., by reducing unwanted sound by the addition of a further sound specifically designed to cancel the first. Active noise cancellation (ANC) sometimes also is referred to as active noise reduction (ANR). For example, the active noise cancellation circuit may be configured to provide hybrid ANC, feed-forward ANC, or feedback ANC. The active noise cancellation circuit may be provided as discrete circuitry, integrated circuitry, or a combination thereof. In some example embodiments, the active noise cancellation circuit is integrated with the processor and/or the audio processor.

According to the present aspect, the processor is configured to determine, whether a call is being conducted. For example, the processor may determine, whether one of the microphones is active to capture the user's voice or whether the headset currently is transmitting user audio, i.e., comprising the user's voice when speaking, through a given transmit channel. The transmit channel in the example of a wired headset may be the outgoing cable connection (for example an audio connection). In case of a wireless headset, the transmit channel for example may be the respective outgoing data or audio channel of the wireless connection. Furthermore, and in corresponding example embodiments, the processor may determine whether a call is being conducted by capturing call status information (e.g., of a communication circuit or system), such as 'on-hook' and 'off-hook' events from a connected communication interface. In some example embodiments, the processor interfaces with the communication interface and correspondingly obtains the respective 'on-hook' and 'off-hook' events. It is noted that generally, 'on-hook' describes a state wherein a call is conducted. In some example embodiments, the processor comprises a voice activity detector and determines, whether a call is being conducted using the voice activity detector. The voice activity detector in the present example embodiments is configured to detect a human voice or speech from at least one or the one or more microphones and indicates the user's voice to the processor by providing a corresponding 'voice bit'. The voice activity detector may be provided with a timeout so that a short pause in the user's speech does not indicate that the call has ended.

The communication circuit or interface may be of any suitable type, including USB, POTS, DECT, Bluetooth, Internet telephony systems, and Video conferencing systems. It is noted that the term 'call' may refer to a voice calls and/or a video calls, including voice or video recordings.

Once it is determined that a call is currently being conducted, the processor switches the active noise cancellation circuit automatically from a first ANC mode to a second ANC mode. The first ANC mode and the second ANC mode may be of any suitable type, wherein in some example embodiments, the first ANC mode and the second ANC mode differ from each other by at least one setting of a configurable parameter of the active noise cancellation circuit. In other words, when the processor determines that a call being conducted using the headset, at least one configurable parameter of the active noise cancellation circuit is changed in these example embodiments.

The configurable parameter of the active noise cancellation circuit may be of any suitable type, for example, but without limitation: a filter parameter, a gain parameter, tuning, enabling/disabling of at least parts of the active noise cancellation, enabling/disabling at least one of the one or more microphones, without limitation.

In some example embodiments, a goal of the switching from the first ANC mode to the second ANC mode is to provide the user a better call experience when conducting a call, e.g., that the user during the call and when in the second ANC mode can better hear their own voice, compared to the first ANC mode. Accordingly, and in some example embodiments, the second ANC mode may provide an increased feedback of the user's own voice to the user during use and while wearing the headset.

The headset may in some example embodiments comprise further components, such as one or more headbands, earloops, ear cushions, cable assemblies, clothing clips, and/or housings, without limitation.

In some example embodiments, the active noise cancellation circuit is configured so that the first ANC mode provides a (normal) feed-forward ANC and the second ANC mode provides a reduced feed-forward ANC. In this context, a 'reduced ANC' is understood as providing less total noise cancellation compared with normal ANC operation. It is noted that a normal ANC operation is assumed herein whenever active noise cancellation or ANC is discussed without the adjective 'reduced'.

Feed-forward ANC is a type of active noise cancellation, where the active noise cancellation circuit uses at least a first of the one or more microphones for capturing noise, which is located on an outside of the headset. In other words, the microphone used for capturing is not located in the generally closed space between the eardrum of the user and the respective earphone. In some example embodiments, the active noise cancellation circuit is connected to at least two first microphones, wherein each earphone comprises at least one of the first microphones. It is noted that a reduced feed-forward ANC comprises cases, where the feed-forward ANC is switched off. Reducing the feed-forward ANC allows the user to hear more of their own voice when wearing the headset and speaking.

Besides feed-forward ANC, another type of active noise cancellation is 'feedback ANC', in which can be regarded as the opposite of feed-forward ANC. Herein, the active noise cancellation circuit uses at least a second of the one or more microphones for capturing noise, which may be located in the generally closed space between the eardrum of the user and the respective earphone or the one or more microphones are connected to a sealed port which leads into the space between the earphone and eardrum. Such a configuration may be used when the earphones are earbuds. In some example embodiments, the active noise cancellation circuit is connected to at least two second microphones, wherein each earphone comprises at least one of the second microphones. A combination of feed-forward ANC and feedback ANC is considered 'hybrid ANC'.

In some example embodiments, the active noise cancellation circuit is configured so that first ANC mode is a first hybrid ANC mode, comprising feedback ANC and feed-forward ANC.

In some example embodiments, the active noise cancellation circuit is configured so that the second ANC mode does not provide feed-forward ANC. In the present example embodiments, the second ANC mode does not comprise feed-forward ANC, i.e., if the active noise cancellation circuit is configured for feed-forward ANC, any feed-forward ANC is disabled.

In some example embodiments, the active noise cancellation circuit is configured so that in the first ANC mode, at least one first microphone of the one or more microphones is used to provide the feed-forward ANC. In some example embodiments, the active noise cancellation circuit is configured so that in the second ANC mode, the first microphone is used to provide a sidetone of the user's voice to the one or more earphones.

In the current example embodiments, the at least one first microphone, i.e., a component of the ANC system, is used in the first ANC mode to determine exterior noise. The same at least one first microphone is also used in the second ANC mode, namely, to capture the user's voice, which then may be mixed in the signal that is provided to the one or more earphones to provide the user with a sidetone of their own voice.

In some example embodiments, wherein the active noise cancellation circuit is configured so that the second ANC mode is a second hybrid ANC mode. For example, the second ANC mode may provide feedback ANC and/or reduced feed-forward ANC.

In some example embodiments, the processor is further configured to determine that the call has ended (e.g., an end-of-call event); and if the call has ended, to switch the active noise cancellation circuit from the second ANC mode to the first ANC mode. The present example embodiments thus restore the settings of the active noise cancellation circuit that were used before the call has been conducted. In some example embodiments, these settings comprise user-defined settings, such as a gain or filter setting of the first ANC mode.

In some example embodiments, the processor is further configured to determine whether the call has ended from the call status information, obtained from the communication interface.

According to a second exemplary aspect, a processor is provided for use in a headset with automatic noise reduction mode switching, wherein the headset comprises an active noise cancellation circuit. According to the present aspect, the processor is connectable to the active noise cancellation circuit and is configured to determine whether a call being conducted using the headset, and if a call is being conducted, to switch the active noise cancellation circuit from a first ANC mode to a second ANC mode.

In some example embodiments, the processor is formed externally to the headset. In some example embodiments, the processor is connectable to the headset, i.e., via a wired or wireless connection. In some example embodiments, the headset further comprises one or more earphones, and/or one or more microphones.

In some example embodiments, the processor according to the present exemplary aspect is configured according to one or more of the example embodiments of the headset according to the first exemplary aspect.

According to a third exemplary aspect, a method of automatic noise reduction mode switching for a headset is provided, wherein the headset comprises an active noise cancellation circuit. The method comprises: determining, if a call is being conducted using the headset; and if a call is being conducted, to switch the active noise cancellation circuit from a first ANC mode to a second ANC mode.

In some example embodiments, the headset further comprises one or more earphones, and/or one or more microphones.

In some example embodiments, the method according to the present exemplary aspect is configured according to one or more of the example embodiments of the preceding aspects.

Reference will now be made to the drawings in which the various elements of example embodiments will be given numerical designations and in which further example embodiments will be discussed.

In the exemplary example embodiments, the described components of the example embodiments each represent individual features that are to be considered independent of one another, in the combination as shown or described, and in combinations other than shown or described. In addition, the described example embodiments can also be supplemented by features of the invention other than those described.

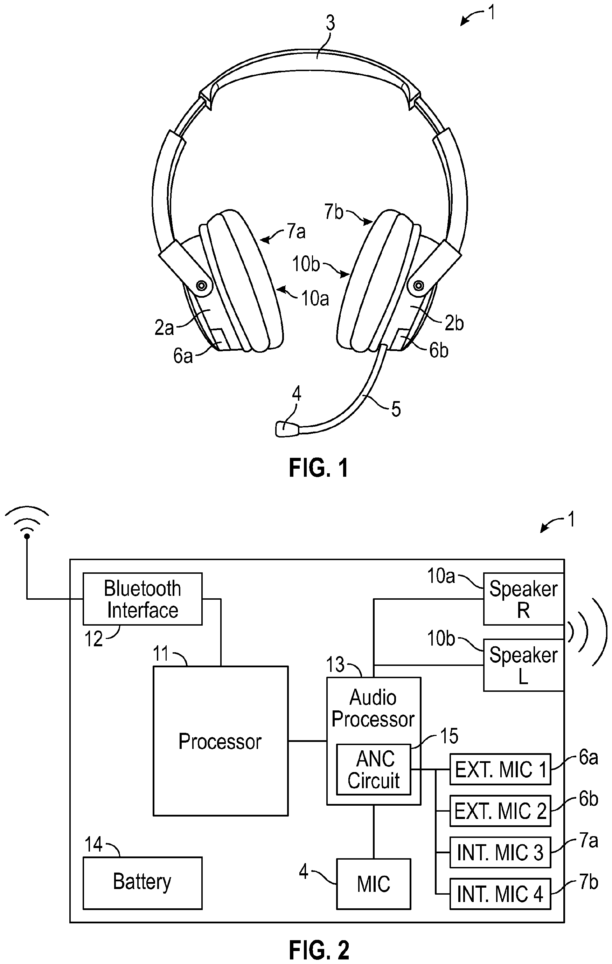

FIG. 1 shows a schematic front view of an example embodiment of a wireless headset 1. The headset comprises two earphones 2a, 2b, connected via headband 3. Each earphone 2a, 2b comprises a speaker 10a, 10b to produce output audio to a user during use, i.e., when the user is wearing the headset 1 on their head. A microphone 4 is arranged on microphone boom 5, which microphone 4 is employed to capture the user's voice during use when transmitting a corresponding voice signal to a remote device, such as a remote call participant.

Earphones 2a, 2b comprise additional exterior microphones 6a, 6b, which are used as parts of an active noise cancellation (ANC) system to provide a so-called feed-forward active noise cancellation. Exterior ANC microphones 6a, 6b are arranged on an outside of the earphones 2a, 2b to directly capture environmental noise. Additional interior ANC microphones 7a, 7b are arranged on an inside of the earphones 2a, 2b, next to the two speakers 10a, 10b. During use, these two interior ANC microphones 7a, 7b are provided in the closed space between the earphones 2a, 2b and the user's eardrum. The two interior ANC microphones 7a, 7b are also parts of the ANC system to provide so-called feedback active noise cancellation. Together, the exterior ANC microphones 6a, 6b and the interior ANC microphones 7a, 7b allow the ANC system to provide a hybrid active noise cancellation.

The headset 1 comprises further internal components, some of which are discussed in more detail with reference to the schematic block diagram of FIG. 2.

Headset 1 according to this example embodiment comprises a processor 11, i.e., in the present example embodiment, a microprocessor, which comprises programming to provide typical headset functionality, namely, to provide output audio to the user from incoming audio data from the remote call participant, received by Bluetooth interface 12, and to provide outgoing audio data to the remote call participant, via the Bluetooth interface 12, from user audio, received via the microphone 4. An audio processor 13 with an amplifier circuit (not shown) is arranged to process the incoming audio data, provide equalization and D/A conversion, and to drive the two speakers 10a, 10b. The audio processor 13 also processes the user audio, received via the microphone 4, and provides a corresponding digital audio stream to the processor 11 for transmission via the Bluetooth interface 12. A battery 14 is provided to power all aforementioned components of the wireless headset 1.

The audio processor 13 furthermore comprises an active noise cancellation circuit 15, in the following referred to as 'ANC circuit 15' for brevity. ANC circuit 15 is provided in the present example embodiment as a software code, stored in memory of audio processor 13. The functionality of ANC circuit 15, and in particular that of a feed-forward ANC algorithm and a feedback ANC algorithm is obtained when the software code is executed on audio processor 13. In some example embodiments, the functionality of ANC circuit 15 may be provided by hardwired logic alone, which may be discrete and/or integrated.

Audio processor 13 and the ANC circuit 15 are connected with the exterior ANC microphones 6a, 6b and the interior ANC microphones 7a, 7b to capture environmental noise and to provide signals that for the user during use, cancels out the environmental noise. The exterior ANC microphones 6a, 6b are used by the feed-forward ANC algorithm of the ANC circuit 15 and the interior ANC microphones 7a, 7b are used by the feedback ANC algorithm of the ANC circuit 15,

During use, headset 1 receives an incoming audio data stream from a Bluetooth device (not shown), such as a desktop computer, laptop, smart phone, or tablet, via Bluetooth interface 12 and provides the corresponding audio to the user. When a call is conducted, the user's voice is captured by microphone 4 and a corresponding outgoing audio data stream is transmitted via Bluetooth interface 12 to the Bluetooth device and the remote device consequently.

The user is able to selectively switch on ANC circuit 15, either via software on the Bluetooth device or a user interface (not shown), provided on earphone 2b. As discussed in the preceding the ANC circuit 15 provides hybrid ANC, i.e., a combination of feedback ANC and feed-forward ANC. Headsets that use hybrid ANC typically do not provide a good user experience when making calls. That is because the additional cancellation due to the feed-forward ANC removes much of the natural "sidetone" the user would get from only having feedback ANC or not wearing a headset. The experience of wearing a headset with a hybrid ANC system that provides high amounts of cancellation is similar to talking with ear plugs.

Accordingly, the headset 1 of the present example embodiment, or more precisely processor 11 of headset 1 is configured for automatic noise reduction mode switching.

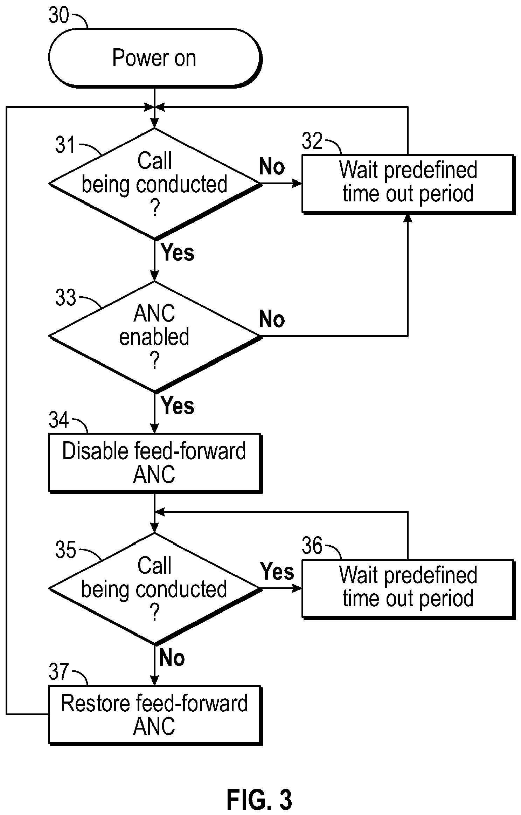

FIG. 3 shows an exemplary block chart of the operation of the automatic mode switching of processor 11 of headset 1 of the present example embodiment.

The process begins in step 30 with the powering on of headset 1 using the user interface (not shown). In step 31, the processor 11 determines, if a call is being conducted using the headset 1.

If this is not the case, the processor in step 32 waits for a predetermined timeout period (e.g., 1 second) and repeats step 31.

If a call is being conducted, the processor 11 in step 33 determines, whether the user enabled the hybrid ANC algorithm or the feed-forward ANC algorithm of ANC circuit 15. In other words, the processor 11 determines, if the user is in a situation, where the lack of natural sidetone would make talking unpleasant to the user. A call in this context may be a voice call, a video call, an audio conference, a video conference, an audio or video recording, or the like.

Processor 11 determines, whether a call is being conducted by determining, whether the outgoing audio stream to the Bluetooth interface 12 is active. Alternatively or additionally, processor 11 may be configured to determine the 'near voice' at the microphone 4, i.e., speech in close proximity using a voice activity detector (not shown) of audio processor 13.

If the hybrid ANC algorithm or the feed-forward ANC algorithm is not enabled, the operation reverts to step 32. If the hybrid ANC algorithm or the feed-forward ANC algorithm is enabled, the operation of processor 11 continues with step 34 and the processor 11 disables the feed-forward ANC algorithm of ANC circuit 15. Alternatively, the processor in step 34 could set the feed-forward ANC of ANC circuit 15 to a reduced ANC, which provides less total noise cancellation. This allows the user to better hear their voice. The processor 11 additionally stores the previous settings of feed-forward ANC of the ANC circuit 15.

In step 35, the processor 11 again checks, if the call is still being conducted. If this is the case, the processor waits for a predetermined timeout period (e.g., 1 second) and repeats step 35.

If in step 35, the processor 11 determines that the call is completed, the operation moves to step 37, where the previous setting of the feed-forward ANC of ANC circuit 15 is restored. The operation then reverts to step 31 until the headset 1 is powered off.

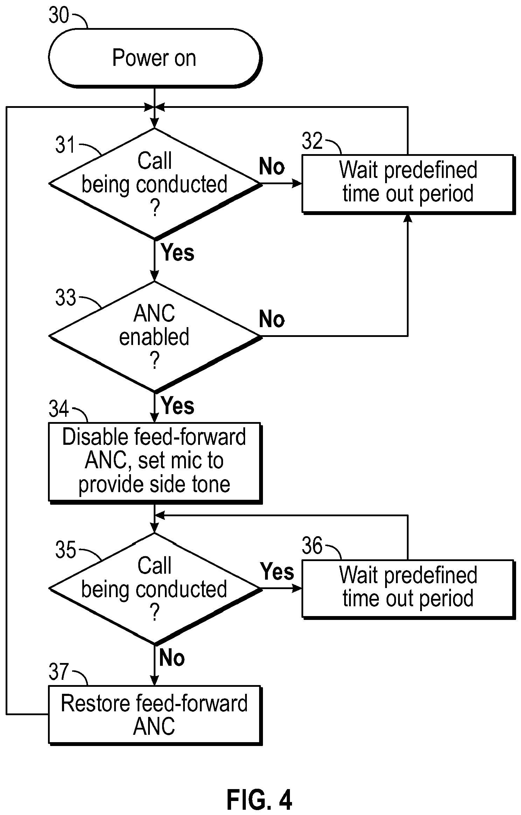

FIG. 4 shows a block chart of the operation of the automatic mode switching of processor 11 of headset 1 according to another example embodiment.

The headset 1 corresponds to the example embodiment of FIGS. 1-3, with the exception of the operation in step 34 in the present example embodiment. According to the example embodiment of FIG. 4, in step 34, in addition to disabling of the feed-forward ANC algorithm of ANC circuit 15, the microphones 6a, 6b, that are currently not used due to the feed-forward ANC algorithm being disabled, are now used to capture a sidetone signal having the user's voice. The sidetone signal is then mixed into the audio signal that is provided to the user via the speakers 10a, 10b by the audio processor 13. The present example embodiment provides a further improved user experience when conducting a call.

The invention has been described in the preceding using various exemplary embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor, module or other unit or device may fulfil the functions of several items recited in the claims.

The term "exemplary" used throughout the specification means "serving as an example, instance, or exemplification" and does not mean "preferred" or "having advantages" over other embodiments.

The mere fact that certain measures are recited in mutually different dependent claims or embodiments does not indicate that a combination of these measures cannot be used to advantage. Any reference signs in the claims should not be construed as limiting the scope.

## Claims

1. A headset with automatic noise reduction mode switching, comprising at least:
one or more earphones;
one or more microphones;
a processor; and
an active noise cancellation, ANC, circuit, connected at least with the processor; wherein
the processor is configured to determine whether a call is being conducted using the headset, and if a call is being conducted, to switch the active noise cancellation circuit from a first ANC mode to a second ANC mode.

2. The headset of claim 1, wherein the active noise cancellation circuit is configured so that the second ANC mode differs from the first ANC mode at least in one configurable parameter of the active noise cancellation circuit.

3. The headset of claim 2, wherein the second ANC mode during use of a user provides the user with increased feedback of the user's own voice, compared with the first ANC mode.

4. The headset of claim 1, wherein the active noise cancellation circuit is configured according to one of:
so that the first ANC mode provides a feed-forward ANC and the second ANC mode provides reduced feed-forward ANC; or
so that the first ANC mode is a first hybrid ANC mode, providing feedback ANC and feed-forward ANC; or
so that second ANC mode is a second hybrid ANC mode.

5. The headset of claim 1, wherein the active noise cancellation circuit is configured so that the first ANC mode provides a feed-forward ANC and the second ANC mode does not provide feed-forward ANC.

6. The headset of claim 5, wherein the active noise cancellation circuit is configured so that in the first ANC mode, at least one first microphone of the one or more microphones is used to provide the feed-forward ANC, wherein in the second ANC mode, the first microphone is used to provide a sidetone of the user's voice to the one or more earphones.

7. The headset of claim 1, wherein the processor is further configured to determine that the call has ended; and if the call has ended, to switch the active noise cancellation circuit from the second ANC mode to the first ANC mode.

8. The headset of claim 1, further comprising a communication interface, connected with the processor; wherein the communication interface provides call status information to the processor; and wherein the processor is configured to determine whether a call is conducted from the call status information.

9. The headset of claim 8, wherein the processor is further configured to determine whether the call has ended from the call status information.

10. The headset of claim 1, wherein the headset further comprises a microphone boom, which microphone boom comprises at least one of the one or more microphones.

11. The headset of claim 1, wherein at least a first microphone of the one or more microphones is arranged on an outside of the headset; and wherein the first microphone is connected with at least the active noise cancellation circuit.

12. The headset of claim 11, wherein at least a second microphone of the one or more microphones is arranged, so that during use, the second microphone is arranged between one of the earphones and an eardrum of the user; and wherein the second microphone is connected with at least the active noise cancellation circuit.

13. The headset of claim 1, wherein the headset is one of: a supra-aural headset, a circum-aural headset.

14. A processor for use in a headset with automatic noise reduction mode switching, which headset comprises at least an active noise cancellation circuit, wherein the processor is connectable to the active noise cancellation circuit and is configured to determine whether a call is being conducted using the headset, and if a call is being conducted, to switch the active noise cancellation circuit from a first ANC mode to a second ANC mode.

15. A method of automatic noise reduction mode switching for a headset, which headset comprises at least an active noise cancellation circuit, comprising:
determining, if a call is being conducted using the headset; and
if a call is being conducted, to switch the active noise cancellation circuit from a first ANC mode to a second ANC mode.
